# EUROPÄISCHE PATENTSCHRIFT

(11) **EP 0 506 218 B1**
(45) Veröffentlichungstag und Bekanntmachung des Hinweises auf die Patenterteilung: **31.01.1996**
(21) Anmeldenummer: 92250069.9
(22) Anmeldetag: 24.03.1992
(51) Int. Cl.: B29C 45/14, B29C 45/28, B29C 45/76, B29C 45/56

(54) **Verfahren und Vorrichtung zur Herstellung dekorbeschichteter Kunststoff-Formteile**
Method and apparatus for making plastic articles having a decorative coating
Procédé et dispositif pour fabriquer des articles en matière plastique pourvus d'un revêtement décoratif

(30) Priorität: 26.03.1991 DE 4110445
(43) Veröffentlichungstag der Anmeldung: 30.09.1992
(73) Patentinhaber: MANNESMANN Aktiengesellschaft, D-40027 Düsseldorf (DE)
(72) Erfinder: Fischbach, Gunther, W-8500 Nürnberg (DE)
(74) Vertreter: Presting, Hans-Joachim, Dipl.-Ing.

(56) Entgegenhaltungen:
- EP-A- 0 397 883
- DE-A- 3 744 554
- DE-A- 3 927 995
- FR-A- 2 329 434
- US-A- 4 702 689
- PATENT ABSTRACTS OF JAPAN vol. 10, no. 77 (M-464)(2134) 26. März 1986 & JP-A-60 220 717 (TOYOTA JIDOSHA KK)
- PATENT ABSTRACTS OF JAPAN vol. 10, no. 44 (M-455)(2101) 21. Februar 1986 & JP-A-60 196 322 (MEIKI SEISAKUSHO KK)

## Beschreibung

Die Erfindung betrifft ein Verfahren gemäß Oberbegriff des Patentanspruchs 1 und eine Vorrichtung gemäß Oberbegriff des Patentanspruchs 7.

Die Dekorbeschichtung der Oberfläche von Kunststoffteilen mit Textilien, Leder, Folien oder dergleichen wird üblicherweise mittels Kaschieren durchgeführt. Als Alternative zu diesem relativ arbeitsintensiven Verfahren kann man den Verbund der Werkstoffe auch in einem Arbeitsgang durch Hinterspritzen herstellen.

Ein Verfahren der gattungsgemäßen Art ist aus der FR-A-23 29 434 bekannt.

Aus Kunststoffe 80 (1990) 9, Seite 997 ff "Hinterspritzen von Dekormaterialien durch Niederdruckspritzgießen" ist es bekannt, Kunststoffe und Dekormaterial durch Spritzgießen direkt miteinander zu verbinden, wobei die mehrere Millimeter dicken Dekormaterialien mit einem Thermoplast hinterspritzt werden. Aus dieser Schrift sind zwar Vorprüfverfahren für das Hinterspritzen bekannt, Maßnahmen zum Minimieren des Druckes zum Verhindern von Einfallstellen an Rippen und Wanddrickenveränderungen sind nicht zu entnehmen.

Bei einer Fachtagung des Deutschen Kunststoffzentrums am 15. und 16.11.1990 ist im Zusammenhang mit dem Dekorieren von Formteilen auf den Einsatz von Spritzträgeeinrichtungen oder atmenden Werkzeugen hingewiesen worden. Aus einer aus Anlaß der Tagung herausgegebenen Schrift ist auch die Verwendung eines gesteuerten Heißkanals bei langen Fließwegen und somit die Anwendung einer Kaskadentechnik bekannt. Zwar wird eine feinfühlige Regelung der spritzrelevanten Daten mit der Möglichkeit einer graphischen Darstellung erwähnt und dabei auf den Spritzdruck hingewiesen. Als Meßgröße den Verfahrweg der Schnecke zur Kaskadensteuerung zu nutzen, ist dieser Schrift nicht zu entnehmen.

Aus der Schrift DE-OS 39 27 995 ist es bei einem Verfahren zum Steuern des Nachdruckes beim Spritzgießen thermoplastischer Kunststoffe bekannt, durch Verschlüsse absperrbare Düsenkanäle, über die in den Hohlraum des Formwerkzeuges eingespritzt wird, neben Drucksignalen das Wegmeßsignal von der Einspritzschnecke zu erfassen (Spalte 4, Zeilen 9-17). Dieses Verfahren, bei dem die Abhängigkeit eines oder mehrerer gemessener Formteil-Sollparameter in Relation gesetzt werden, von mehreren Prozeß-Parametern aus mindestens einem Lernzyklus zur Zugrundelegung der Werkzeug-Kunststoffpaarung ist aufwendig und kostenintensiv.

Der Erfindung liegt daher die Aufgabe zugrunde, ein Verfahren und eine Vorrichtung zur Herstellung beschichteter Kunststoff-Formteile aufzuzeigen, bei dem bzw. bei der mit einfachen Mitteln textil-, leder- oder folienbeschichtete Kunststoff-Formteile bei Änderung der Prozeßdaten mit minimalem Aufwand verändert werden können.

Die Erfindung löst die Aufgabe durch die nebengeordneten Ansprüche 1 und 7, die Unteransprüche enthalten vorteilhafte Weiterbildungen.

Erfindungsgemäß wird das aus Textil-, Leder- oder Folien beschichtete Dekormaterial in der Kavität sicher positioniert, die über mehrere absperrbare Heißkanaldüsen mit Formmasse füllbar ist. Die Verschlüsse der Heißkanaldüsen werden in Abhängigkeit der Position der Schnecke während des Einspritzvorganges betätigt. Dabei ist die Steuerung der Heizkanaldüsen in die Steuerung der Spritzgießmaschine integriert.

Im Gegensatz zu der sonst üblichen zeitabhängigen Steuerung der Betätigung der Verschlußdüsen wird bei der wegabhängigen Steuerung in Abhängigkeit der Änderung des Geschwindigkeitsprofils der Schnecke der Füllvorgang nicht verändert. Das Schaltschema der Heißkanaldüsen ist mit festen volumetrischen Füllzuständen des Werkzeuges gekoppelt. Dadurch wird das Einrichten von Produktionsvorgängen und die Bemusterung der Werkzeuge günstiger, die Bedienung wird vereinfacht und Fehlerquellen werden vermieden. Es entfällt insbesondere die iterative Neuabstimmung aller Zeitglieder.

Zur Erreichung minimaler Forminnendrücke wird die Form während des Einspritzvorganges nicht vollständig geschlossen und es wird das Spritzprägeverfahren angewandt. Für Formteile, die mit textilen- oder folienartigem Dekor beschichtet werden, wird das Spritzprägeverfahren modifiziert unter Berücksichtigung der Dehnfähigkeit der Einlegematerialien. Eine weitere Anpassung an die Stoffeigenschaften des Dekormaterials und der Werkzeugform wird durch ein vorgeschaltetes Vorprägen erreicht. Der Vorprägevorgang ermöglicht es, das eingelegte Dekormaterial mit einer frei wählbaren Geschwindigkeit der Kontur des Werkzeuges anzupassen. Dadurch kann die Prägegeschwindigkeit vollständig mit dem Ziel minimaler Innendrücke eingestellt werden.

Durch die wegabhängige Steuerung der Heißkanalverschlüsse wird ein äußerst exaktes und reproduzierbares Verstellen der Verschlußelemente erreicht. Der Forminnendruck wird hierdurch gering und dabei auf gleichmäßigem Niveau gehalten. Dies erlaubt die Verarbeitung auch empfindlicher Dekormaterialien und Erreichung hoher Qualitätsmerkmale.

Das Spritzprägeverfahren wird noch weiter verbessert durch ein Simultanprägen. Hierbei wird vor Ende der Einspritzbewegung die Geschwindigkeit der Schnecke reduziert und die Prägebewegung aktiviert. Der Druckaufbau und der Vortrieb der Schmelzfront im Werkzeug wird nun anteilig von der Schnecke und der Schließeinheit erzeugt. Durch das kontinuierliche Fließen der Schmelzfront werden Markierungen an den Formteilen vermieden. Der sonst übliche Druckeinbruch und der Stillstand der Fließfront im Werkzeug tritt nicht auf. Die Füllzeit als Summe aus Spritzzeit und Prägezeit wird bei gleichmäßig niedrigem Druck im Werkzeug minimiert.

Weiterhin wird vorgeschlagen, daß bei dem Verfahren einzelne oder alle Heißkanaldüsen zu Beginn des Nachdrucks geöffnet werden. Dadurch wird vermieden, daß nur die am Ende des Füllschemas geöffneten Düsen zur Einleitung von Nachdruck aktiviert werden.

Die erfindungsgemäße Spritzgießmaschine erlaubt die Herstellung dekorbeschichteter Kunststoff-Formteile mit größter Genauigkeit und bei einem hohen Mechanisierungsgrad. Einlegen des Dekors und Ausstoßen der fertigen Formteile ist dabei automatisiert. Zur Vermeidung von Auswerfermarkierungen auf der Dekoroberseite wird bei der hier angewandten Hinterspritztechnik die Auswerfereinrichtung und die Schmelzenanbindung an die Kavität auf der gleichen Seite, nämlich an dem feststehenden Werkzeugteil angeordnet.

In vorteilhafter Weise wird das zugeschnittene Dekormaterial über eine mit Nadelgreifern ausgestattete Transporteinrichtung zugeführt und der in das Werkzeug integrierten Greifereinrichtung übergeben. Das aus zwei unabhängigen Bewegungen zusammengesetzte Zufassen des Greifers besteht zum einen aus einer Drehung des Greiferarmes um 180 Grad oder einer Verfahrbewegung des bereits nach ihm gerichteten Greiferarmes senkrecht zur Werkzeugbewegungsrichtung. Durch die weitere axiale Bewegung des Greiferarmes in Richtung der greifenden Werkzeughälfte wird das Dekormaterial fixiert. Zudem drückt aus der Werkzeughälfte heraus ein federbelasteter Bolzen gegen das Dekormaterial.

In einer anderen Ausgestaltung der Erfindung tritt an die Stelle der mechanischen eine pneumatische Haltevorrichtung.

Beim Hinterspritzen von Dekormaterial, insbesondere Textilien, wird bei Verwendung einer Kaskadensteuerung für die Verschlußelemente der Heißkanaldüsen für den Zeitraum des Füllvorgangs überwiegend eine einzelne Heißkanaldüse geöffnet. Um sicherzustellen, daß bei Fehlern am Heißkanal eine unmittelbare Reaktion der Steuerung, beispielsweise Stoppen des Einspritzvorganges, mit gleichzeitiger Fehlermeldung am Bedienerterminal und Ausschußselektierung erfolgt, ist die Überwachung der Heißkanalnadelposition erforderlich. Dies geschieht über Endlagenschalter für die vordere und die hintere Endlage der Heißkanalnadel.

An der erfindungsgemäßen Spritzgießmaschine sind Elemente vorgesehen, die eine besondere Gestaltung der Dekorkanten zulassen. Bei der Hinterspritztechnik ist es oftmals erforderlich, über das Ende des Kunststoffträgers hinaus Dekormaterial überstehen zu lassen. Ziel dieser Maßnahme ist es, mit dem überstehenden Dekor einen Umbug durchzuführen, um am Rand des Formteils einen optischen Abschluß mit Dekormaterial zu erzeugen. Durch eine Konstruktion mit fehlenden Werkzeugkanten besteht die Möglichkeit, einen Dekorstreifen über den Formteilhohlraum hinaus stehen zu lassen, wobei die fehlenden Werkzeugkanten durch das Andrücken des Dekors an die zweite Werkzeughälfte in diesem Werkzeugbereich ein Hinterspritzen unterbinden. Dieses Verfahren ist ebenso für Tauchkantenwerkzeug anwendbar.

Für die vorgeschlagene Spritzgießmaschine ist eine Ausrüstung zur graphischen Darstellung der ermittelten Meßdaten vorgesehen. Die Kontrolle von Prägeweg, Werkzeuginnendruck und Schneckenweg durch eine graphische Aufzeichnung ermöglicht es, die Präge- und Schneckenvorlaufgeschwindigkeit mit dem Ziel minimaler Werkzeuginnendrücke optisch wahrzunehmen und individuell abzustimmen.

Ein Beispiel der Erfindung ist in der Zeichnung dargestellt und nachfolgend beschrieben. Es zeigt:
- Fig. 1: eine übersicht der Spritzgießmaschine,
- Fig. 2: den Verschluß einer Heißkanaldüse,
- Fig. 3: eine Haltevorrichtung für das Dekormaterial und
- Fig. 4: eine Kantenformeinrichtung.

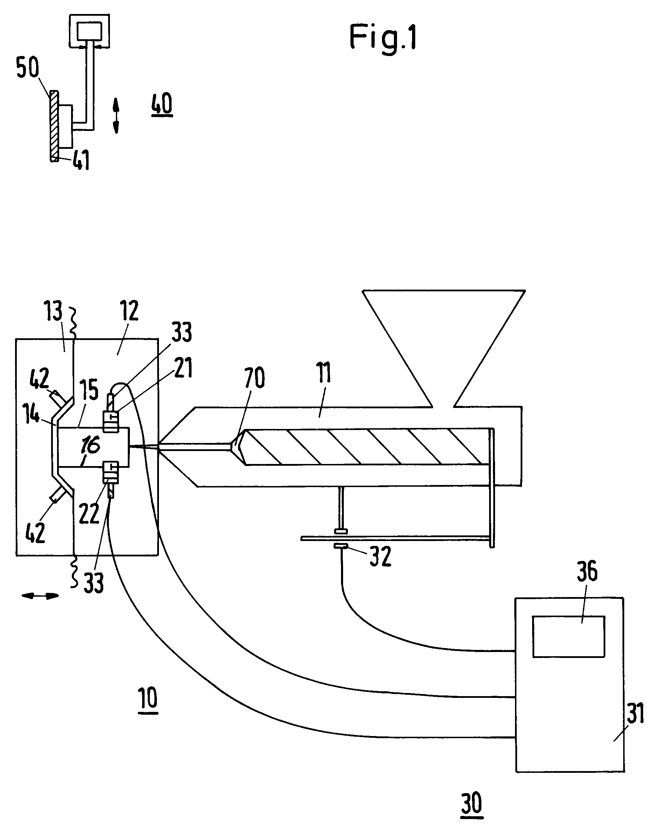

Die Figur 1 zeigt eine Spritzgießmaschine 10 mit einer Spritzgießschnecke 11, die Formmasse 70 über Heißkanäle 15 und 16 in eine Kavität 14 einspritzen kann. Die Kavität 14 ist in einer Formschließeinrichtung angeordnet, die aus einem feststehenden Werkzeugteil 12 und einem bewegbaren Werkzeugteil 13 besteht. Die zur Kavität führenden Heißkanäle 15, 16 sind durch Heizkanalverschlüsse 21, 22 verschließbar, die über Steuerelemente 33 ansteuerbar sind.

Im Bereich der Formschließeinrichtung ist eine Transporteinrichtung 40 vorgesehen, die einen das Dekormaterial 50 aufnehmenden Nadelgreifer 41 aufweist, der das Dekormaterial 50 in die geöffnete Kavität einbringt, in der das Dekormaterial 50 von Halteelementen 42 fixierbar ist.

Die Spritzgießmaschine 10 ist mit Meß- und Regelaggregaten 30 ausgerüstet. An der Spritzgießmaschine 10 ist ein Wegaufnehmer 32 vorgesehen, der meß- und regeltechnisch mit einer Auswerteeinrichtung 31 verbunden ist. Die Auswerteeinrichtung 31 ist u. a. mit den Steuerelementen 33 der Heißkanalvorschlüsse 21, 22 verbunden.

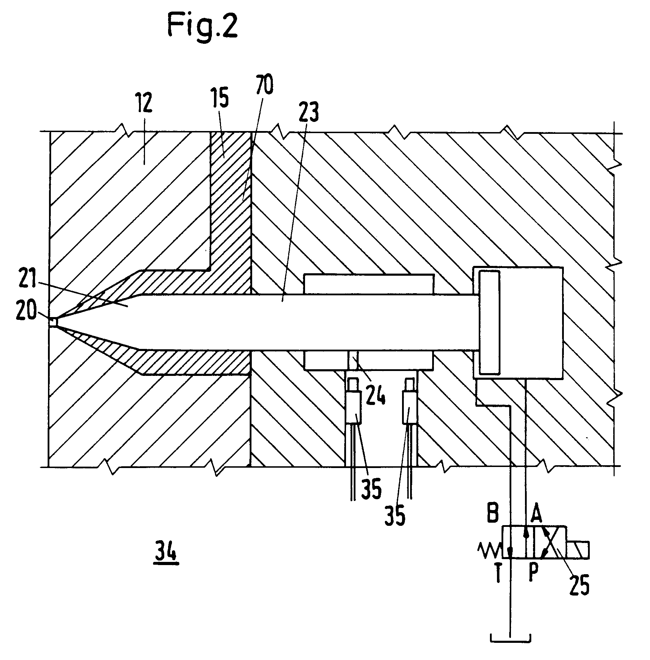

Die Figur 2 zeigt eine Einspritzdüse 20 mit einem Heißkanalverschluß 21, der als Nadel 23 ausgebildet ist. Die in dem feststehenden Werkzeugteil 12 angeordnete Nadel 23 steuert den Materialfluß der Formmasse 70 im Heißkanal 15.

Die Nadel 23 weist Lageüberwachungselemente 34 auf wobei im vorliegenden Fall Nocken 24 vorgesehen sind, die mit Endlagenschaltern 35 zusammenarbeiten. Die Nadel 23 wird über ein hydraulisches Steueraggregat bewegt.

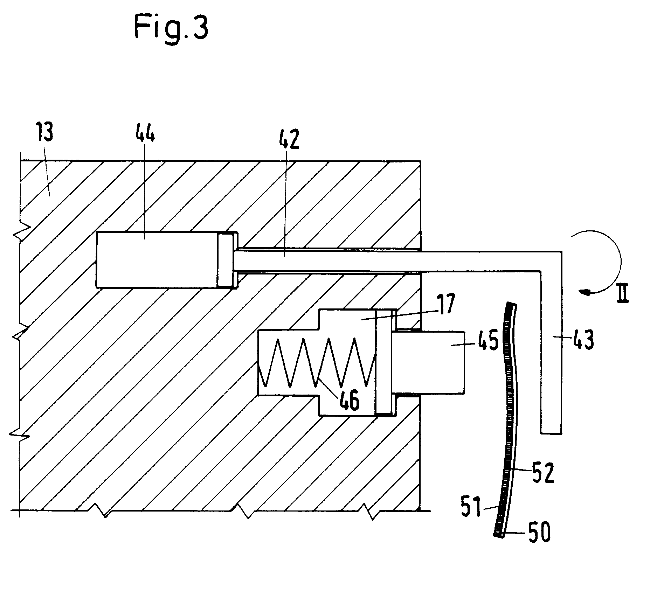

Die Figur 3 zeigt einen Ausschnitt aus dem bewegbaren Werkzeugteil 13, in dem ein Halteelement 42 und ein Andruckbolzen 45 vorgesehen sind. Der Andruckbolzen 45 ist in Vertiefungen 17 geführt und durch Federn 46 aus der Mündung der Vertiefung 17 herausdrückbar. Die Stirn des Andruckbolzens 45 legt sich dabei gegen die Oberseite 51 des Dekormaterial 50.

Die Unterseite 52 wird von einer Greifhand 43 des Halteelementes 42 ergriffen und wird zu einer Kolben-Zylinder-Einheit 44 in Richtung bewegbares Werkzeugteil 13 geführt.

Das Halteelement 42 ist dabei um die Längsachse II drehbar, so daß die Greifhand 43 vom Dekormaterial 50 hin- und weggeschwenkt werden kann.

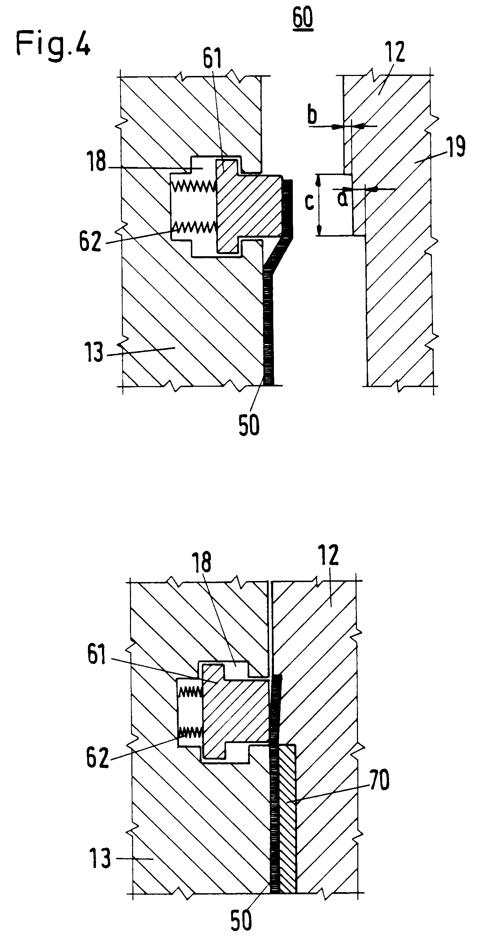

Die Figur 4 zeigt einen Ausschnitt aus dem feststehenden Werkzeugteil 12 und dem bewegbaren Werkzeugteil 13. Im Werkzeugteil 13 ist eine Rille 18 vorgesehen, in der ein Andruckbalken 61 einer Kantenbearbeitungseinrichtung 60 vorgesehen ist. Der Andruckbalken 61 wird durch Andruckfedern 62 aus der Seitenfläche des Werkzeugteils 13 herausgeführt, wobei die Stirnfläche sich gegen das Dekormaterial 50 lehnt.

Die Seitenfläche des feststehenden Werkzeugteils 12 ist stufenförmig ausgebildet. Die in Richtung bewegbarem Werkzeugteil 13 weisende Zwischenstufe 19 bestitzt eine Stufenhöhe a und eine Stufenbreite c. Die Stufenhöhe a der Zwischenstufe 19 ist dabei kleiner als die Kavitätstiefe b, und zwar um die Größenordnung der Materialdicke des Dekormaterials 50. Im oberen Teil der Figur 4 ist die Situation in geöffneter Formschließvorrichtung dargestellt, im unteren Bereich ist die Form geschlossen und die Formmasse 70 ist in die Kavität eingespritzt worden.

## Patentansprüche

1. Verfahren zur Herstellung dekorbeschichteter Kunststoff-Formteile durch Spritzgießen auf einer Spitzgießmaschine mit einer Einspritzschnecke (11), die den Kunststoff in die in einer Formschließvorrichtung (12, 13) angeordneten Kavität (14) einbringt, wobei vor dem Einbringen des Kunststoffes das Dekormaterial (50) in die Kavität (14) eingelegt und mit der Dekoroberseite (51) zum bewegbaren Werkzeugteil (13) weisend gehalten wird, anschließend das bewegbare Werkzeugteil (13) der Formschließeinrichtung in Schließrichtung bewegt wird und nach Füllen der Kavität (14) mit dem Kunststoff nach vorgegebener Zeit das mit dem Dekormaterial (50) verbundene Formteile ausgestoßen wird,
gekennzeichnet durch folgende Schritte:
a) spätestens nach vollständigem Schließen der Formschließeinrichtung (12,13) wird die Formmasse (70) bei gleichzeitigem Messen des Schneckenverfahrweges über eine Düse in die Kavität (14) eingespritzt, und
b) während des Einspritzens der Formmasse (70) über eine Düse wird in Abhängigkeit des Schneckenverfahrensweges mindestens eine weitere Düse zum Einspritzen der Formmasse geöffnet.

2. Verfahren nach Anspruch 1,
dadurch gekennzeichnet,
daß das Schließen der Form (12, 13) entsprechend dem Spritzgießverfahren durchgeführt wird.

3. Verfahren nach Anspruch 1 oder 2,
dadurch gekennzeichnet,
daß die Einspritzdüsen untereinander kaskadenförmig in Reihe geöffnet und geschlossen werden.

4. Verfahren nach einem der o.g. Ansprüche,
dadurch gekennzeichnet,
daß der Prägehub der Form simultan zu dem Vorlauf der Schnecke erfolgt.

5. Verfahren nach Anspruch 1 oder 3,
dadurch gekennzeichnet,
daß nach Füllen der Form mindestens eine Einspritzdüse in Abhängigkeit des Beginns der Nachdruckphase geöffnet wird.

6. Verfahren nach Anspruch 1,
dadurch gekennzeichnet,
daß vor dem Einspritzen der Formmasse (70) ein Vorprägevorgang zur Anpassung des eingelegten Dekormaterials (50) an die Kontur des Werkzeugs erfolgt.

7. Spritzgießmaschine mit einer Einspritzschnecke (11), die über absperrbare Heißkanäle (15, 16) mit der Kavität (14) einer aus einem feststehenden und einem bewegbaren Werkzeugteil (12 bzw. 13) bestehende Schließeinrichtung in Verbindung steht und mit einer Transporteinrichtung (40) zum Zuführen von Dekormaterial (50) in, die Kavität (14), einschließlich der Antriebsmaschine sowie mit Meß- und Regelaggregaten zur Durchführung des Verfahrens nach einem der o.g. Ansprüche,
dadurch gekennzeichnet,
daß an der Einspritzschnecke (11) ein Wegsignalaufnehmer (32) vorgesehen ist, der mit einer Auswerteeinheit (31) in Verbindung steht,
daß die Auswerteeinheit (31) mit Steuerelementen von Heißkanalverschlüssen (21, 22) verbunden ist, und
daß am bewegbaren Werkzeugteil (13) Halteelemente (42) zur Fixierung des Dekormaterials (50) angeordnet sind.

8. Spritzgießmaschine nach Anspruch 7,
dadurch gekennzeichnet,
daß an den Heißkanalverschlüssen (21, 22) Elemente (34) zur Lageüberwachung vorgesehen sind, die mit der Auswerteeinheit (31) meßtechnisch verbunden sind.

## Claims

1. A method of producing decoratively coated moulded plastics parts by injection moulding in an injection moulding machine with an injection screw (11), which introduces the plastics material into the cavity (14) arranged in a die clamp (12, 13), the decorative material (50) being inserted into the cavity (14) before introduction of the plastics material and being held with the upper decorative side (51) directed towards the movable tool part (13), the movable tool part (13) of the die clamp subsequently being moved in the closure direction and the moulded parts connected with the decorative material (50) being ejected after a predetermined period after filling of the cavity (14) with the plastics material, characterized by the following steps:
a) at the latent after complete closure of the die clamp (12, 13), the moulding compound (70) is injected into the cavity (14) via a nozzle, with simultaneous measuring of the screw displacement path, and
b) during injection of the moulding compound (70) via a nozzle, at least one further nozzle is opened for injection of the moulding compound, depending on the screw displacement path.

2. A method according to claim 1, characterized in that closure of the die (12, 13) is effected in accordance with the injection moulding process.

3. A method according to claim 1 or claim 2, characterized in that the injection nozzles are opened and closed in series in the manner of a cascade.

4. A method according to any one of the preceding claims, characterized in that the stamping stroke of the die occurs at the same time as the forward movement of the screw.

5. A method according to claim 1 or claim 3,
characterized in that, after packing of the die, at least one injection nozzle is opened in dependence on the beginning of the dwell pressure phase.

6. A method according to claim 1, characterized in that, before injection of the moulding compound (70), a prestamping process is effected to adapt the inserted decorative material (50) to the contour of the tool.

7. An injection moulding machine comprising an injection screw (11), which is connected via closable hot runners (15, 16) with the cavity (14) of a die clamp consisting of one stationary tool part and one movable tool part (12 and 13 respectively), and comprising a conveying device (40) for supplying decorative material (50) to the cavity (14), including the drive machine, as well as measuring and regulating units for implementing the method according to any one of the preceding claims, characterized in that a displacement signal pick-up (32) is provided on the injection screw (11), which pick-up (32) is connected with an evaluation unit (31), in that the evaluation unit (31) is connected with control elements of hot runner seals (21, 22), and in that holding elements (42) are provided on the movable tool part (13) for fixing of the decorative material (50).

8. An injection moulding machine according to claim 7, characterized in that elements (34) for position monitoring are provided on the hot runner seals (21, 22), which elements (34) are connected to the evaluation unit (31) by means of a measuring system.

## Revendications

1. Procédé pour fabriquer des pièces de matière synthétique pourvues d'un revêtement décoratif par moulage par injection dans une machine de moulage par injection, comportant une vis sans fin d'injection (11), qui amène la matière synthétique dans la cavité (14) agencée dans un dispositif de fermeture de moule (12, 13), avant l'amenée de la matière synthétique, la matière décorative (50) étant déposée dans la cavité (14) et étant maintenue avec le dessus décoratif (51) vers la pièce d'outil mobile (13), puis la pièce d'outil mobile (13) du dispositif de fermeture de moule est déplacée dans la direction de fermeture et, après remplissage de la cavité (14) par la matière synthétique, après un temps prédéfini, la pièce liée à la matière décorative (50) est éjectée,
caractérisé par les étapes suivantes :
a) au plus tard après la fermeture complète du dispositif de fermeture de moule (12, 13), la masse de moulage (70) est injectée par une buse dans la cavité (14) en mesurant simultanément la course de déplacement de la vis sans fin, et
b) pendant l'injection de la masse de moulage (70) par une buse, au moins une autre buse pour l'injection de la masse de moulage est ouverte de façon dépendant de la course de déplacement de la vis sans fin.

2. Procédé selon la revendication 1,
caractérisé en ce que la fermeture du moule (12, 13) est effectuée de façon correspondant au procédé de moulage par injection.

3. Procédé selon la revendication 1 ou 2,
caractérisé en ce que les buses d'injection sont ouvertes et fermées en série l'une après l'autre en cascade.

4. Procédé selon une des revendications précédentes,
caractérisé en ce que la course d'estampage du moule est effectuée simultanément à l'avance de la vis sans fin.

5. Procédé selon la revendication 1 ou 3,
caractérisé en ce que, après le remplissage du moule, au moins une buse d'injection est ouverte de façon dépendant du début de la phase de maintien en pression.

6. Procédé selon la revendication 1,
caractérisé en ce que, avant l'injection de la masse de moulage (70), un processus de préestempage pour adapter la matière décorative déposée (50) au contour de l'outil est effectué.

7. Machine de moulage par injection, comportant une vis sans fin d'injection (11), qui est reliée, par l'intermédiaire de canaux de chauffage pouvant être fermés (15, 16), à la cavité (14) d'un dispositif de fermeture constitué d'une partie d'outil fixe et d'une partie d'outil mobile (12 ou 13), et un dispositif de transport (40) pour amener de la matière décorative (50) dans la cavité (14), y compris la machine d'entraînement ainsi que des appareils de régulation et de mesure pour effectuer le procédé selon une des revendications précédentes,
caractérisée en ce que, sur la vis sans fin d'injection (11), il est prévu un capteur de signaux de déplacement (32) qui est relié à une unité d'exploitation (31), en ce que l'unité d'exploitation (31) est reliée à des éléments de commande d'obturateurs (21,22) des canaux de chauffage, et en ce que, sur la partie d'outil mobile (13), sont agencés des éléments de maintien (42) pour fixer la matière décorative (50).

8. Machine de moulage par injection selon la revendication 7,
caractérisé en ce que, sur les obturateurs (21, 22) des canaux de chauffage, sont prévus des éléments (34) de surveillance de position qui sont reliés, par une technique de mesure, à l'unité d'exploitation (31).
